# EUROPEAN PATENT SPECIFICATION

(11) **EP 2 020 864 B1**
(45) Date of publication and mention of the grant of the patent: **07.07.2010**
(21) Application number: 07759005.7
(22) Date of filing: 21.03.2007
(51) Int. Cl.: A23G 4/10, A23G 4/18

(54) **COMPRESSED GUM AND PROCESS FOR THE PREPARATION THEREOF**
KOMPRIMIERTER KAUGUMMI UND VERFAHREN ZU SEINER HERSTELLUNG
GOMME COMPRIMEE ET PROCEDE DE PREPARATION ASSOCIE

(30) Priority: 22.03.2006 US 784692 P
(43) Date of publication of application: 11.02.2009
(73) Proprietor: WM. WRIGLEY JR. COMPANY, Chicago, IL 60611 (US)
(72) Inventor: GREY, Ronald, T., Chicago, Illinois 60622 (US); PADOVANI, Bruno, S., Chicago, Illinois 60622 (US); FRITZ, Douglas, P., Wilmington, NC 28409 (US)
(74) Representative: Murphy, Colm Damien
(86) International application number: PCT/US2007/064509
(87) International publication number: WO 2007/109718

(56) References cited:
- EP-A- 1 474 993
- WO-A-2004/066746
- WO-A-2004/067595
- WO-A2-2006/127738
- US-A- 5 667 823

## Description

### FIELD OF THE INVENTION

The present invention generally relates to a granulated chewing gum composition which may be compressed, and to a process for the preparation thereof. In particular, the present invention relates to a granulated chewing gum composition which is suitable for compressing into, for example, a gum tablet and which comprises a solid hydrogenated starch hydrolysate, as well as to a process for the preparation thereof.

Additionally, or alternatively, the present invention relates to a process for preparing a granulated chewing gum composition, and/or a compressed chewing gum tablet, wherein a chewing gum base is used therein which may be comminuted at an elevated temperature (e.g., at a temperature above the freezing temperature of the gum base), as well as to a chewing gum composition comprising such a gum base.

### SUMMARY OF THE INVENTION

The present invention is directed to a granular chewing gum composition comprising a gum base, a flavorant, a bulk sweetener, and a solid hydrogenated starch hydrolysate, wherein the solid hydrogenated starch hydrolysate comprises greater than 90 wt% of saccharides having a DP greater than or equal to 3, based on the total weight of the hydrogenated starch hydrolysate.

The present invention is still further directed to a granular chewing gum composition comprising a gum base, a flavorant, a bulk sweetener, and a solid hydrogenated starch hydrolysate, wherein the solid hydrogenated starch hydrolysate comprises greater than 90 Wt% of saccharides having a DP greater than or equal to 3 wherein the granular chewing gum composition comprises at least 5 wt% of the solid hydrogenated starch hydrolysate, based on the total weight of the granular chewing gum composition.

The present invention is still further directed to a tabletted gum chewing gum composition comprising one of the foregoing granular chewing gum compositions, the tabletted gum optionally comprising a coating on the surface thereof.

The present invention is still further directed to a process for preparing a granular chewing gum composition. The process comprises contacting a granulated gum base, a flavorant, a bulk sweetener, and a solid hydrogenated starch hydrolysate, wherein the solid hydrogenated starch hydrolysate comprises greater than 90 Wt% of saccharides having a DP greater than or equal to 3.

The present invention is still further directed to a process for preparing a granular chewing gum composition. The process comprises contacting a granulated gum base, a flavorant, a bulk sweetener and a solid hydrogenated starch hydrolysate, wherein the solid hydrogenated starch hydrolysate comprises greater than 90 wt% of saccharides having a DP greater than or equal to 3, based on the total weight of the hydrogenated starch hydrolysate.

The present invention is still further directed to a process for preparing a granular chewing gum composition. The process comprises comminuting a chewing gum base at a temperature of greater than 5°C; and contacting the comminuted gum base with a flavorant and a bulk sweetener.

The present invention is still further directed to a process for preparing a granular chewing gum composition. The process comprises contacting a granulated gum base, a flavorant, a bulk sweetener, and a solid hydrogenated starch hydrolysate, wherein the solid hydrogenated starch hydrolysate comprises greater than 90 Wt% of saccharides having a DP greater than or equal to 3, wherein the granular chewing gum composition comprises at least 5 wt% of the solid hydrogenated starch hydrolysate, based on the total weight of the granular chewing gum composition.

The present invention is still further directed to a process for preparing a granular chewing gum composition. The process comprises contacting a granulated gum base, a flavorant, a bulk sweetener and a hydrogenated starch hydrolysate, wherein the solid hydrogenated starch hydrolysate comprises greater than 90 Wt% of saccharides having a DP greater than or equal to 3 wherein the hydrogenated starch hydrolysate has a moisture content of less than 10 wt%, based on the total weight of the hydrogenated starch hydrolysate.

The present invention is still further directed to a process for preparing a granular chewing gum composition. The process comprises contacting a granulated gum base, a flavorant, a bulk sweetener and a hydrogenated starch hydrolysate, wherein the solid hydrogenated starch hydrolysate comprises greater than 90 Wt% of saccharides having a DP greater than or equal to 3 , wherein the solid hydrogenated starch hydrolysate has an average particle size of greater than 20 microns and less than about 100 microns.

The present invention is still further directed to a process for preparing a granular chewing gum composition. The process comprises contacting a granulated gum base, a flavorant, a bulk sweetener and a solid hydrogenated starch hydrolysate, wherein the solid hydrogenated starch hydrolysate comprises greater than 90 Wt% of saccharides having a DP greater than or equal to 3 , wherein greater than 90 wt% of the granulated gum base has a particle size which is greater than 0.15 mm and less than 0.8 mm.

The present invention is still further directed to a process for preparing a granular chewing gum composition. The process comprises, in relevant part, (i) comminuting a chewing gum base at a temperature of greater than 5°C; and, (ii) contacting the comminuted gum base with additional chewing gum components, such as a bulk sweetener and a flavorant. Optionally, the process may further comprise contacting the comminuted gum base with a solid hydrogenated starch hydrolysate, wherein the solid hydrogenated starch hydrolysate comprises greater than 90 Wt% of saccharides having a DP greater than or equal to 3.

One or more of the above-noted processes may further comprise compressing the granular chewing gum composition into a tablet, and optionally applying a coating on the surface of the tabletted chewing gum composition.

### BRIEF DESCRIPTION OF THE DRAWING

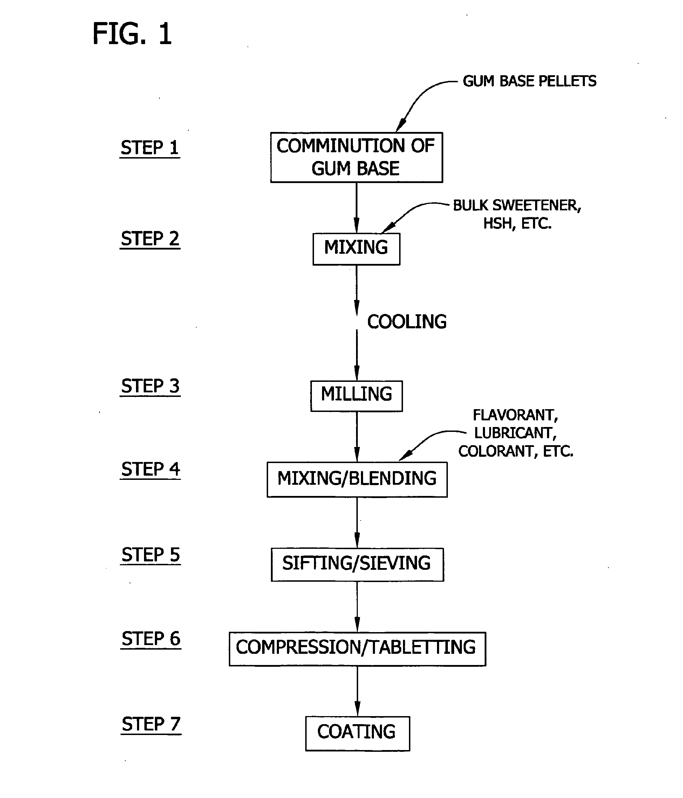

Fig. 1 is a process flow diagram for an embodiment of the process of the present invention.

### DETAILED DESCRIPTION OF THE EMBODIMENTS

In accordance with the present invention, and as further detailed herein below, it has been discovered that the use of a solid (e.g., a powdered or dried, such as spraydried) hydrogenated starch hydrolysate (hereinafter referred to generally as "HSH") as a chewing gum composition component aids in the preparation of a granular form thereof, the granular chewing gum composition having desirable chew characteristics and optionally being compressed. It has additionally been discovered that this, or an alternative, chewing gum composition may be advantageously prepared using a gum base that may be comminuted at an elevated temperature (e.g., without substantially freezing or reducing the temperature of the base to substantially near the freezing temperature of the gum base, in order to render it sufficiently hard or brittle for comminuting).

Without being held to any particular theory, it is generally believed that the addition of solid HSH to the granular chewing gum composition acts to improve or increase cohesion of a compressed gum product, formed by compressing the granular chewing gum composition, during the initial and/or intermediate phases of chewing. It is believed that poor cohesion in such a chewing gum tablet typically results in an initial crumbling or breaking apart into a multiplicity of pieces of the gum tablet when initially chewed, which may not be desirable. Additionally, it is believed that the addition of solid HSH acts to improve cohesion due to the decreased rate of solubility in the oral cavity or saliva, as compared to for example more commonly used sweeteners or chewing gum components (such as, for example, sorbitol). More specifically, it is believed that, for example, more rapidly dissolving sweeteners or components, such as sorbitol, result in the quick scattering or spreading apart of the chewing gum composition granules in the oral cavity. This acts to hinder the formation of a wad or single mass of gum within the oral cavity, upon initiation of mastication or chewing. In contrast, solid HSH dissolves more slowly. This slower rate of dissolution helps to keep the chewing gum composition granulates together in the oral cavity longer after mastication or chewing is initiated, which in turn increases the time these granules may be forced or worked together into a single mass or wad of gum.

### A. Chewing Gum Composition

In general, a chewing gum composition typically comprises a water-insoluble portion, typically referred to as the "gum base," and a water-soluble bulk portion. The water-soluble bulk portion dissipates over a period of time during chewing. In contrast, the gum base portion is retained in the mouth throughout the chew. The amount of gum base used in a chewing gum composition may depend on a number of factors, including for example the desired chew characteristics and/or other physical properties of the gum. Typically, however, the granular chewing gum composition of the present invention comprises 5 to 50 wt%, or 10 to 45 wt%, or 20 to 40 wt%, of the gum base, based on the total weight of the granular chewing gum composition.

### 1. Hydrogenated Starch Hydrolysate

As noted above, in one embodiment of the present invention, the chewing gum composition may advantageously comprise a solid hydrogenated starch hydrolysate ("HSH"). The solid HSH which may be used in the composition of the present invention may be, for example, solidified hydrogenated corn syrup or solidified hydrogenated starch hydrolysates of varying dextrose equivalents (DE), as well as various solidified or powdered hydrogenated glucose syrups which contain sorbitol, hydrogenated disaccharides, tri- to hexa-hydrogenated saccharides, and hydrogenated higher polysaccharides, or mixtures of any two or more of the above.

Solid hydrogenated starch hydrolysates may be produced by, for example, the partial hydrolysis of corn, wheat, tapioca, rice, or potato starch, with the subsequent hydrogenation of the hydrolysate at high temperature under pressure. The end product is typically composed of sorbitol, maltitol, and higher hydrogenated saccharides. However, varying the conditions and extent of the hydrolysis may affect the presence or absence, as well as the concentration, of various mono-, di-, oligo- and polymeric hydrogenated saccharides in the resulting product that is obtained. Accordingly, a wide range of polyols, which may be used to satisfy a variety of requirements with respect to different levels of sweetness, viscosity and humectancy, may be produced.

The various kinds of hydrogenated mono-, di-, oligo- and poly-saccharides present may be characterized, for example, by the degree of polymerization ("DP" or "HP") after hydrogenation, using means known in the art (e.g., HPLC analysis). For example, hydrogenated monosaccharides have a DP of 1 and hydrogenated disaccharides have a DP of 2, while hydrogenated tri-, quat-, penta-, hexa-, hepta-, octa-, nona- and deca-saccharides have DP values of 3, 4, 5, 6, 7, 8, 9 and 10, respectively (with larger saccharides having DP values of more than 10).

It is to be noted that, generally speaking, the term "hydrogenated starch hydrolysate" may be applied to essentially any polyol produced by the hydrogenation of the saccharide products of starch hydrolysis. Typically, however, certain polyols, such as sorbitol, mannitol and maltitol, are referred to by their common chemical names, while "hydrogenated starch hydrolysate" is more commonly used to describe the broad group of polyols that contain substantial quantities of hydrogenated oligo- and polysaccharides in addition to any monomeric or dimeric polyols (sorbitol/mannitol or maltitol, respectively).

In view of the foregoing, it is to be noted that, the solid HSH suitable for use comprises a combination of sorbitol, maltitol, and one or more other saccharides having a DP of 3 or more. More specifically, in one embodiment the solid HSH may comprise: (i) about 1 to 4 wt%, or 2 to 3 wt%, sorbitol; (ii) 2 to 8 wt%, or 3 to 6 wt%, maltitol; and, (iii) 90 to 98 wt%, or 92 to 96 wt%, of saccharides having a DP of 3 or more; that is, the HSH may comprise greater than 90 wt%, 92 wt%, 94 wt%, 96 wt% or even 98 wt% of saccharides having a DP of 3 or more (e.g., a DP of 4, 5, 6, 7, 8, 9, 10 or more). For example, in this or another embodiment, the solid HSH may comprise: (iv) 2 to 10 wt%, or 4 to 8 wt%, of a saccharide having a DP of 3; (v) 2 to 8 wt%, or 3 to 6 wt%, of a saccharide having a DP of 4; (vi) 2 to 8 wt%, or 3 to 6 wt%, of a saccharide having a DP of 5; (vii) 4 to 14 wt%, or 6 to 12 wt%, of a saccharide having a DP of 6; (viii) 5 to 12 wt%, or 6 to 10 wt%, of a saccharide having a DP of 7; (ix) 2 to 5 wt%, or 3 to 4 wt%, of a saccharide having a DP of 8; (x) 2 to 6 wt%, or 3 to 5 wt%, of a saccharide having a DP of 9; (xii) 2 to 5 wt%, or 3 to 4 wt%, of a saccharide having a DP of 10 or greater; or, (xiii) some combination of these saccharides (including combinations with sorbitol and/or maltitol or mannitol).

Among the particularly useful HSH solids or powders are, for example, those that comprise: greater than 90 wt% or greater than 95 wt% of saccharides having a DP greater than or equal to 3; or greater than 80 wt% or greater than 90 wt% of saccharides having a DP greater than or equal to 4; or greater than 75 wt% or greater than 85 wt% of saccharides having a DP greater than or equal to 5; or greater than a 70 wt% or greater than 80 wt% of saccharides having a DP greater than or equal to 6; or greater than 55 wt% or 65 wt% of saccharides having a DP greater than or equal to 7; or greater than 50 wt% or greater than 60 wt% of saccharides having a DP greater than or equal to 8; or greater than 40 wt% or greater than 50 wt% of saccharides having a DP greater than or equal to 9; or greater than 40 wt%, greater than 50 wt%, or greater than 60 wt% of saccharides having a DP greater than or equal to 10. Such HSH solids include, for example, the commercially available HSH STABILITE™ SD30 and SD60 (commercially available from Innova LLC). The compositions of these particular HSH solids or powders are generally set forth below in Table 1:

**Table 1**

| **Hydrogenated Polymer ("HP") Distribution** (typical values, wt%) | | |
|---|---|---|
| Saccharides | SD30 | SD60 |
| sorbitol | 2.6 | 2.4 |
| maltitol | 6.6 | 2.7 |
| HP-3 | 8.6 | 4.3 |
| HP-4 | 6.6 | 3.7 |
| HP-5 | 6.4 | 3.5 |
| HP-6 | 11.9 | 5.9 |
| HP-7 | 10.1 | 6.5 |
| HP-8 | 4.0 | 4.4 |
| HP-9 | 3.5 | 4.9 |
| HP-10 or more | 39.8 | 61.7 |
| Total | 100.0 | 100.0 |

It is to be further noted that, generally speaking, HSH may be prepared using a number of means known in the art (see, e.g., U.S. Patent Nos. 6,780,990 and 5,667,823, and U.S. Patent Application Publication No. 2004/0224058, as well as the references noted therein, the entire contents of which are incorporated by reference herein). In one embodiment, however, once prepared, HSH is dried (e.g., spray dried), using means known in the art, to yield a solid material having a water or moisture content of less than 10 wt%, and in some embodiments less than 8 wt%, less than 6 wt%, less than 4 wt% or even less than 2 wt%. Additionally, the solid HSH may be prepared, again using means known in the art (e.g., spray drying), such that is has an average particle size with'n the range of, for example, greater than 20 microns and less than 100 microns, or from greater than 30 microns to less than 80 microns, or from greater than 40 microns and less than 70 microns, as determined by means standard in the art. In one embodiment, the average particle size of the solid HSH is 60 microns.

In general, the amount of HSH solids present in the granular chewing gum composition of the present invention may vary, depending upon, for example, the desired balance between the cohesion, sweetness, and/or solubility of the chewing gum composition. For example, a high cohesion may be obtained using higher concentration of HSH solids, but in such instances the sweetness and/or solubility of the granular chewing gum composition may be reduced. Typically, however, the concentration of HSH solids in the granular chewing gum composition, based on the total weight of the composition, may be at least 1 wt%, at least 2 wt%, at least 4 wt%, at least 5 wt%, at least 10 wt%, at least 15 wt%, or more (e.g., at least 20 wt%, at least 25 wt%, at least 50 wt%, or even at least 75 wt%), the concentration being within the range of, for example, greater than 1 wt% to less than 75 wt%, or from greater than 2 wt% and less than 50 wt%, or from greater than 4 wt% and less than 25 wt%, or from greater than 5 wt% and less than 15 wt%.

It is to be noted that the precise composition of the solid HSH employed, as well as the moisture content, particle size and/or the amount of solid HSH in the granular chewing gum composition of the present invention may be other than herein described, without departing from the scope of the present invention. Generally speaking, the composition of the solid HSH, the moisture content and/or particle size thereof, and/or the amount of solid HSH in the granular chewing gum composition of the present invention, will be such that the desired properties of the granular chewing gum composition (e.g., flowability, compressability, cohesion, sweetness, solubility, etc.,) are optimized for a given application.

### 2. Gum Base

It is to be noted that, in one embodiment of the present invention, HSH may be used with one or more of the known and/or commercially available gum bases, and/or other chewing gum components, known in the art. Alternatively, HSH may be used with a gum base that may be comminuted at an elevated temperature, as further detailed herein below.

### a. Physical Properties

In one embodiment of the present invention, the gum base is typically in a dry (e.g., a water content of less than about 5 wt%, less than about 4 wt%, less than about 2 wt%, or even less than 1 wt%), solid, and friable form at the time it is added to the mixing apparatus for contacting or mixing with the other components of the granular chewing gum composition. In one particular embodiment, a gum base is used that is sufficiently hard at temperatures in excess of about 0°C (32°F), such that it may be comminuted without the need for substantially freezing the gum base first. More particularly, in accordance with at least one embodiment of the present invention, a gum base is used that is sufficiently hard, such that it may be comminuted at a temperature of greater than 5°C ( 40°F), greater than 10°C ( 50°F), or greater than 15°C ( 60°F), the gum base being comminuted, for example, at a temperature in the range of about greater than about 5°C ( 40°F) and less than 25°C (about 80°F), or greater than 10°C ( 50°F) and less than 15°C ( 60°F).

As noted elsewhere herein, essentially any comminuting technique known in the art may be employed in accordance with the present invention, in order to reduce the initial size of the gum base, and obtain a comminuted chewing gum base having an average particle size suitable for use in the granular chewing gum composition of the present invention. Generally speaking, the process and/or process conditions employed to prepare the comminuted chewing gum base are such that the resulting particle size is optimized for the desired properties of the granular chewing gum composition in which the base is to be used. Typically, however, the average particle size of the comminuted gum base may, for example, range from greater than 0.15 mm (i.e., + #100 sieve, U.S. Standard) to less than 2.4 mm (i.e., - #8 sieve, U.S. Standard), or from greater than 0.15 or 0.25 mm (i.e., + #60 sieve, U.S. Standard) to less than 0.8 mm (i.e., - #20 sieve, U.S. Standard). In one embodiment, 90 or 95 wt% of the comminuted gum base has a particle size of less than 2.4 mm, and/or 40 to 60 wt%, or 45 to 55 wt%, of the comminuted gum base has a particle size of less than 0.8 mm, and/or less than 5 wt%, 3 wt% or 1 wt% of the comminuted gum base has a particle size of less than 0.15 mm. In this or another embodiment, greater than 90 or 95 wt% of the comminuted gum base has a particle size within the range 0.15 mm to 2.4 mm, and/or greater than 90 or about 95 wt% of the comminuted gum base has a particle size within the range of 0.15 or 0.25 mm to 0.8 mm.

In this regard it is to be noted that, as used herein, a plus or minus sign before a sieve size indicates a particle is larger than or smaller than, respectively, the opening or hole in a screen of the noted sieve size. For example, a particle having + #60 sieve size (U.S. Standard) would have a size larger than the opening in a #60 sieve screen, and thus would not pass therethrough, whereas a particle having a - #60 sieve size (U.S. Standard) would have a size smaller than the opening in a 60 sieve screen, and thus would pass therethrough.

An exemplary particle size distribution for a comminuted gum base is illustrated in Table 2, below (the concentration numbers below indicating the wt% of the material collected, and thus not passing through, screens of the noted sieve size, based on the total weight of the gum base):

**Table 2**

| **Exemplary Particle Size Distribution** | | |
|---|---|---|
| Particle Size (sieve size, U.S. Standard) | Particle Size (in mm) | Concentration (approx. wt%) |
| #8 | approx. 2.4 | 1 |
| #20 | approx. 0.8 | 49 |
| #40 | approx. 0.4 | 30 |
| #60 | approx. 0.25 | 12 |
| #100 | approx. 0.15 | 6 |
| Pan | N/A | 2 |

Accordingly, in one exemplary embodiment, a comminuted gum base, suitable for use in a granular chewing gum composition, may comprise (based on the total weight of the gum base): (i) 5 wt%, 3 wt%, or even 1 wt% of particles having a size of greater than 2.4 mm (+ #8 sieve); (ii) greater than 40 wt% and less than 60 wt%, or greater than 45 wt% and less than 55 wt%, of particles having a size of less than 2.4 mm (- #8 sieve) and greater than 0.8 mm (+ #20 sieve); (iii) greater than 20 wt% and less than 40 wt%, or greater than 25 wt% and less than 35 wt%, of particles having a size of less than 0.8 mm (- #20 sieve) and greater than 0.4 mm (+ #40 sieve); (iv) greater than 5 wt% and less than 20 wt%, or greater than 10 wt% and less than 15 wt%, of particles having a size of less than 0.4 mm (- #40 sieve) and greater than 0.25 mm (+ #60 sieve); (v) greater than 1 wt% and less than 10 wt%, or greater than 4 wt% and less than 8 wt%, of particles having a size of less than 0.25 mm (- #60 sieve) and greater than 0.15 mm (+ #100 sieve); and/or, (vi) 5 wt%, 3 wt% or 1 wt% of particles having a size of less than 0.15 mm (- #100 sieve).

Generally speaking, and as noted elsewhere herein, the insoluble gum base portion of the granular chewing gum composition of the present invention may be essentially any gum base that possesses the desired properties, and that can be uniformly distributed as small particles throughout the granular chewing gum composition when the gum base is mixed with the other components thereof in a mixing apparatus, as described elsewhere herein. In one particular embodiment, however, in addition to optionally being sufficiently hard such that it may be comminuted at an elevated temperature, as noted herein above, the gum base may additionally or optionally have, for example (using means known in the art): (i) a softening point (Ring & Ball) of at least about 70°C (about 158°F), at least about 75°C (about 167°F), at least about 80°C (about 176°F), at least about 85°C (about 185°F), or even at least about 90°C (about 194°F), the base for example having a softening point that falls within the range of about 70°C (about 158°F) to about 90°C (194°F), or about 80°C (about 176°F) to about 85°C (about 185°F); and/or (ii) a glass transition temperature (T_{g}) of about 35°C, about 40°C, or even about 45°C (± less than about 5°C, less than about 4°C, less than about 3°C, or even less than about 2°C).

In this regard it is to be noted that, without being held to any particular theory, it is generally believed that the reason that certain gum bases, which are well-suited for comminuting or grinding at an elevated temperature, have a low T_{g} and high softening point may be due to the use of a Fischer-Tropsch wax (i.e., a synthetic paraffin wax) therein, which are known to have high and rather sharp melting points. Accordingly, in one particular embodiment of a gum base well suited for grinding at an elevated temperature, the gum base may have a concentration of a Fischer-Tropsch wax of at least about 2 wt%, at least about 4 wt%, at least about 6 wt%, at least about 8 wt% or even at least about 10 wt% or more (e.g., about 15 wt%, about 20 wt%, about 30 wt%, or even about 40 wt%), the concentration for example falling within the range of greater than about 2 wt% to about 20 wt%, about 4 wt% to about 15 wt%, or about 6 wt% to about 10 wt% (based on the total weight of the gum base). Alternatively, however, the concentration may fall within the range of about 10 wt% to about 40 wt%, or about 15 wt% to about 20 wt%.

In view of the foregoing, it is to be noted that among the exemplary embodiments of such a gum base are those that have a Fischer-Tropsch wax concentration of about 6 to about 8 wt%, a softening point temperature between about 82°C and about 86°C, and a glass transition temperature of between about 41°C and about 43°C (± less than about 2°C).

It is to be further noted that, for some embodiments, one or more of the various gum base properties noted herein may be other than herein described, without departing from the scope of the present invention. For example, in an alternative embodiment, wherein the granular chewing gum composition comprises HSH, the gum base therein may additionally or optionally have, for example, a softening point of at least about 75°C (about 165°F), at least about 100°C (about 212°F), or even at least about 125°C (about 255°F), the base for example having a softening point that falls within the range of about 75°C (about 165°F) to about 125°C (255°F), or about 90°C (about 195°F) to about 110°C (about 230°F).

It is to be still further noted that, in various embodiments, the gum base may exhibit a Differential Scanning Calorimetry (DSC) value (determined using conventional means known in the art) above various minimums or within certain ranges, and/or a molecular weight (Mw) above various minimums or within certain ranges. For example, the gum base may exhibit a DSC value of at least about 10°C, at least about 20°C, or at least about 30°C, and/or less than about 110°C, less than about 95°C, less than about 90°C, less than about 80°C, or less than about 70°C. In particular, the gum base may exhibit a DSC value of from at least about 10°C to less than about 110°C, from at least about 20°C to less than about 95°C or less than about 80°C, or from at least about 30°C to less than about 90°C or less than about 70°C.

Additionally or alternatively, the gum base may exhibit a Mw of at least about 40,000 daltons, at least about 45,000 daltons, at least about 50,000 daltons, or at least about 60,000 daltons, and/or less than about 100,000 daltons, less than about 90,000 daltons, less than about 80,000 daltons, less than about 75,000 daltons, or less than about 70,000 daltons. In particular, the gum base may exhibit a Mw of from at least about 40,000 to less than about 100,000 daltons, from about at least 50,000 to less than about 90,000 daltons, or from at least about 60,000 to less than about 80,000 daltons. In one alternative embodiment, the gum base may exhibit a Mw of from about 45,000 daltons to about 75,000 daltons, or from about 50,000 daltons to about 70,000 daltons.

It should be understood that the gum base may exhibit a combination of any of the above-noted ranges of DSC values and molecular weights. For example, the gum base may exhibit (i) a DSC value of from about 30°C to about 70°C and a Mw of from about 60,000 to about 80,000 daltons, or (ii) a DSC value of from about 30°C to about 90°C and a Mw of from about 50,000 to about 70,000 daltons.

Additionally, or alternatively, it is to be noted that, with respect to the thermal, as well as physical, properties of the elastomeric component of the gum base, an elastomer suitable for use in one or more embodiments of the gum base may have, for example, a melt flow index (MFI), at about 190°C, that is in the range of about 0.01 g/10 minutes to about 40 g/10 minutes, or about 0.1 g/10 minutes to about 30 g/10 minutes, or even about 0.5 g/10 minutes to about 20 g/10 minutes, as determined using means known in the art. These or other elastomers may also have, for example, a toluene solution viscosity (25 weight percent) that is in the range of about 0.5 Pa.s to about 25 Pa.s, or about 0.6 Pa.s to about 10 Pa.s, as determined using means known in the art. Finally, these or other elastomers may have, for example, a Shore A hardness value that is in the range of about 55 to about 85, or about 60 to about 70, as determined using means known in the art.

It is to be further noted that the scope of the present invention is intended to encompass all of the various combinations or permutations of the properties noted herein.

### b. Composition

The amount of gum base present in the granular chewing gum composition of the present invention may vary, for example, with the optimization of various properties of the granulated chewing gum composition (e.g., flowability, compressability, sweetness, flavor, etc.). Typically, however, the granular chewing gum composition comprises 5 wt% and less than 50 wt%, or 10 wt% and less than 45 wt%, or 20 wt% and less than 40 wt%, or even 25 wt% and less than 35 wt% (e.g., 28 wt%, ( 30 wt% or 32 wt%, for example) of the gum base, based on the total weight of the granular chewing gum composition.

In this regard it is to be noted that, as used herein, the term "gum base" generally refers to one or more pure gums without any additives, or alternatively to blends of one or more pure gums and one or more additives (e.g., those that are sold commercially as gum bases for chewing gum). For example, the insoluble gum base may typically comprise one or more of the following components: elastomers, elastomer/plasticizers, softener/plasticizers (e.g., fats, oils, waxes), fillers (e.g., inorganic fillers), antioxidants, colorants, flavors, sweeteners (e.g., bulk sweeteners, high intensity sweeteners, etc.), and/or emulsifiers, as well as other components that known in the art. Generally speaking, the precise combination of components, as well as the concentrations thereof, may be determined by means known in the art, in order to obtain a gum base and/or chewing gum composition having the desired properties (such as a gum base that may be comminuted at an elevated temperature, as detailed elsewhere herein). However, in one or more embodiments, a gum base suitable for use in the present invention may comprise: (i) at least about 10 wt% and less than about 60 wt%, or at least about 20 wt% and less than about 50 wt%, or at least about 30 wt% and less than about 40 wt%, of an elastomer, a portion or all of which may be a synthetic and/or a natural elastomer; (ii) at least about 5 wt% and less than about 50 wt%, at least about 10 wt% and less than about 40 wt%, or at least about 20 wt% and less than about 30 wt%, of an elastomer plasticizer; (iii) at least about 5 wt% and less than about 30 wt%, or at least about 10 wt% and less than about 20 wt%, of a filler or texturizer; (iv) at least about 5 wt% and less than about 30 wt%, or at least about 10 wt% and less than about 20 wt%, of a softener; and/or, (v) optionally, other minor amounts (e.g., about 5 wt%, about 4 wt%, about 2 wt%, about 1 wt% or less) of various miscellaneous ingredients (such as, for example, colorants or whiteners, antioxidants, flavorants, sweeteners, etc.), wherein the sum of the concentrations of the noted components accounts for about 100 wt% of the gum base composition.

Elastomers provide the rubbery, cohesive nature of the gum, which may vary depending on the chemical structure of the particular elastomer used, as well as how it is compounded with other ingredients. Synthetic elastomers suitable for use in the present invention may include, but are not limited to: polyisobutylene, including low, medium and/or high molecular weight forms, which may have an average molecular weight of about 50,000 daltons, about 100,000 daltons or more (e.g., an average molecular weight falling for example within the range of at least about 100,000 daltons to less than about 600,000 daltons, or at least about 200,000 daltons and less than about 400 000 daltons, such as that disclosed in U.S. Patent Publication No. 2005/0025858, which is incorporated herein by reference); isobutylene-isoprene copolymer (i.e., a butyl elastomer or butyl rubber); styrene copolymers (such as, for example, styrene-butadiene, or "SBR" copolymers, having for example a styrene-butadiene ratio of about 1:3 to about 3:1); polyvinyl acetate (having for example a weight average molecular weight of about 2,000 to about 90,000 daltons, or alternatively between about 6,000 and 40,000 daltons, such as that disclosed in U.S. Patent Publication No. 2005/0025858); polybutadiene; polyisoprene; vinyl polymeric elastomers (e.g., polyvinyl acetate, polyvinyl alcohol, polyvinyl laurate, polyvinyl pyrrolidone, polyethylene, vinyl acetate-vinyl laurate copolymer, vinyl acetate-vinyl stearate copolymer, ethylene/vinyl acetate copolymer, etc.); and, combinations thereof.

Natural elastomers may alternatively, and/or additionally, be used, including for example natural rubbers, such as smoked or liquid latex and guayule, as well as natural gums such as jelutong, lechi caspi, perillo, sorva, massaranduba balata, massaranduba chocolate, nispero, rosindinha, chicle, gutta percha, gutta kataiu, niger gutta, tunu, chilte, chiquibul, gutta hang kang, and combinations thereof.

Elastomer plasticizers may be used to vary the firmness of the gum base. Their polymer plasticizing strength and their varying softening points may cause varying degrees of finished gum (e.g., granular chewing gum and/or compressed gum tablet) firmness when used in the gum base. Elastomer plasticizers that may be used in the granular chewing gum composition of the present invention may include, but are not limited to, natural rosin esters such as glycerol esters of partially hydrogenated rosin, glycerol esters of polymerized rosin, glycerol esters of partially dimerized rosin, glycerol esters of gum rosin, glycerol esters of tall oil rosin, glycerol esters of wood rosin, pentaerythritol esters of partially hydrogenated rosin, methyl and partially hydrogenated methyl esters of rosin, pentaerythritol esters of rosin, synthetic elastomer plasticizers such as terpene resins (such as terpene resins derived from alpha-pinene, beta-pinene, d-limonene and/or dipentene and mixtures thereof), and/or any suitable combinations of the foregoing.

It is to be noted that the particular elastomer plasticizer, or combination of elastomer plasticizers, used will also vary depending on the specific application, and on the type of elastomer(s) which is(are) used. Additionally, when a combination of elastomer plasticizers is used, the ratios of one to the other may be dependent on each respective softening point, on each effect on flavor release, and/or on each respective degree of tack they cause to the gum. For example, ester gums may in some instances have a tendency to increase adhesion to surfaces, and therefore may be less desired in some applications, whereas terpene resins may not have this tendency, and therefore may be more desired in some applications.

It is to be further noted that the amount of plasticizer added to the gum base may depend on a number of factors, including for example the level of elastomer present. If too much elastomer plasticizer is added, the initial mass may, in some instances, become over plasticized and not homogeneous.

Gum base softeners, which may also have a plasticizing effect on the gum base, are not to be confused with water soluble softeners used in the bulking portion of the chewing gum composition. Typically, these include fats and oils, as well as waxes. Fats and oils are typically vegetable oils which are normally partially or fully hydrogenated to increase their melting point. Vegetable oils suitable for such use include, for example, oils of cottonseed, soybean, palm (including palm kernel), coconut, shea, castor, peanut, corn, rapeseed, canola, sunflower, cocoa and others. Less commonly used are animal fats such as milk fat, tallow and lard. Structured fats, which are essentially synthetically compounded glycerol esters (triglycerides) of fatty acids of varying chain lengths, offer an ability to adjust the softening profile by use of short and medium chain fatty acids which are less commonly found in nature.

Waxes may aid in the solidification of gum bases and/or improve the shelf-life and texture of the resulting gum. Wax crystals may also improve the release of flavor. Furthermore, smaller wax crystal size may allow slower release of flavor, since there is more hindrance to the escape of flavor from the wax versus a wax having larger crystal sizes. Suitable waxes include synthetic waxes, such as those containing branched alkanes and copolymerized with monomers such as, but not limited to, polypropylene and polyethylene and Fischer-Tropsch type waxes (e.g., paraffin wax, or a polyethylene wax produced by the polymerization of carbon monoxide under high pressure). It is to be noted that polyethylene wax is not in the same category as polyethylene, a polymer of ethylene monomers. Rather, polyethylene wax is a synthetic wax containing alkane units of varying lengths having attached thereto ethylene monomers. Other, more commonly employed waxes, include paraffin, microcrystalline and natural waxes such as beeswax and carnauba. Microcrystalline waxes, especially those with a high degree of crystallinity, may in some instances be considered bodying agents or textural modifiers.

The gum base may also include a filler or texturizer component. The filler or texturizer component is typically an inorganic powder such as, for example magnesium or calcium carbonate, ground limestone, silicate types such as magnesium or aluminum silicate, clay, alumina, talc, titanium oxide, mono-, di- and tri-phosphate (e.g., dicalcium phosphate), cellulose polymers, such as wood, and combinations thereof. However, among the more typically used fillers are included calcium carbonate and talc. While calcium carbonate may typically be used in some instances, a talc filler may be used for gum bases and/or chewing gum compositions that may come into contact with or employ, for example, acid flavors or provide an acidic environment needed to prevent degradation of an artificial sweetener. The mean particle size for the filler, such as calcium carbonate or talc fillers, may typically range from about 0.1 micron to about 15 microns, or alternatively from about 0.5 to about 10 microns.

Emulsifiers, which may also sometimes have plasticizing properties, may be used to assist in homogenizing the different components of the gum base. Commonly used emulsifiers include, for example, mono- and di-glycerides, such as glycerol monostearate or glycerol distearate, lecithin, and glycerol triacetate. Emulsifiers, when used, typically have a concentration within the gum base of about 2 wt% to about 10 wt%, of the gum base.

Gum bases may also contain other optional additives, such as antioxidants and colors or whiteners (e.g., FD&C dyes and lakes, fruit and vegetable extracts, titanium dioxide, etc.), which serve their normal functions. For example, antioxidants may prolong shelf-life of the gum base, the finished gum, or their respective components, including for example flavorants therein. Antioxidants suitable for use in the gum base, or the finished gum, include, for example, butylated hydroxyanisole (BHA), butylated hydroxytoluene (BHT), beta-carotenes, tocopherols, acidulants such as vitamin C, propyl gallate, and other synthetic and natural types, or mixtures thereof. Although at times less common, flavors and sweeteners may also be added to the gum base.

### c. Preparation

A gum base suitable for use with HSH, in accordance with the present invention, may be obtained commercially, or it may be prepared using methods generally known in the art (e.g., batch or continuous methods of preparation). For purposes of illustration, however, it is to be noted that a gum base may be prepared by adding an amount of the elastomer, filler and an elastomer plasticizer to a heated mixer (e.g., a sigma blade mixer), with the ratio of front to rear mixing speed being controlled as needed (e.g., a higher ratio is typically used for chewing gum base which requires more rigorous compounding of its elastomers).

Processing times, as well as processing techniques, may depend in a number of factors, including for example the components of the gum base, the desired properties of the end product gum base, and, in the case of a batch process, the size of the batch being prepared. For example, compounding of the mixer contents typically begins to be effective once the ingredients have become homogenous. Accordingly, compounding time typically varies, the time ranging for example from about 15 minutes to about 90 minutes in some instances.

A continuous process, using for example a mixing extruder, may alternatively be used to prepare the gum base. As an example, after the initial ingredients have mixed homogeneously and been compounded for the time desired, the balances of the base ingredients may be added in a sequential manner until a homogeneous molten mass is formed. Any remainder of the elastomer and/or the plasticizer may be added after the initial compounding time. Other optional components, such as waxes and/or oils, may be added after the elastomer and plasticizer. The mass is then allowed to become homogeneous before discharging.

In this regard it is to be noted that U.S. Patent No. 6,238,710 discloses a method for continuously manufacturing a chewing gum base, which entails compounding all ingredients in a single extruder. U.S. Patent No. 6,086,925 discloses the manufacture of chewing gum base by adding a hard elastomer, a filler and a lubricating agent to a continuous nixer. U.S. Patent No. 5,419,919 discloses the continuous manufacture of a gum base using a paddle mixer, by selectively feeding different ingredients at different locations in the mixer. U.S. Patent No. 5,397,580 discloses the continuous manufacture of a gum base wherein two continuous mixers are arranged in series and the blend from the first continuous mixer is continuously added to the second continuous mixer. The entire contents of these patents are incorporated herein by reference.

The final temperature of the gum base, when discharged from the mixer or extruder, may be, for example, between 50°C (120°F) and 130°C ( 265°F). The molten mass may be emptied from the mixing kettle into coated or lined pans, or alternatively extruded or cast into any desirable shape, and allowed to cool and solidify. After solidification, if the gum base is in a large mass, it may be comminuted into smaller pieces or chunks, for further processing and use. In one embodiment, the gum base has a spherical or pellet-like shape (either upon discharge from the mixer or extruder, or a larger mass of the gum base is comminuted into these smaller pieces). Additionally, a grinding aid or agent, such as talc, may be applied to the surface of the resulting spherical or pellet-like gum base, to aid with further processing (e.g., to aid with, for example, comminuting of the gum base, for example as further detailed elsewhere herein, to help limit or prevent sticking of the gum base to the inner surface of, for example, the mill or grinding apparatus used to comminute the gum base, and to also help limit or prevent sticking of the gum base, after comminution is complete).

In this regard it is to be noted that those skilled in the art will recognize that many variations of the above described procedure may be followed. For example, in an alternative continuous process, ingredients may be added continuously at various points along the length of the extruder. In this case, the transit time through the extruder may be reduced. Accordingly, the above described procedures should not be viewed in a limiting sense.

### 3. Other Chewing Gum Components

In addition to the solid HSH, the water-soluble bulk portion of the granulated chewing gum composition of the present invention may additionally include, for example, one or more of the following: flavoring agents, bulk sweeteners or high intensity sweeteners, granulating agents, softeners, emulsifiers, coloring agents, acidulants, fillers, antioxidants, and/or lubricants, as well as other components that are known in the art. Generally speaking, the precise combination of components, as well as the concentrations thereof, may be determined by means known in the art, in order to obtain a chewing gum composition having the desired properties.

The type(s), as well as amount(s), of the flavoring agent(s) added to the granular chewing gum composition may vary due to a number of considerations, including for example the desired strength and/or duration of the flavor the composition is to possess. Additionally, the amount of flavoring agent added to the granular chewing gum composition may also vary with the type of flavoring agent to be added, as some agents are more intense than others. However, in one embodiment, the concentration of flavoring agent is at least about 0.5 wt% of the granular chewing gum composition, at least about 1 wt%, at least about 1.5 wt%, at least about 2 wt%, at least about 2.5 wt%, at least about 3 wt%, at least about 4 wt%, at least about 5 wt% or more (e.g., at least about 6 wt%, at least about 7 wt%, at least about 8 wt%, at least about 9 wt%, at least about 10 wt% or more), the concentration for example falling within the range of at least about 1 wt% and less than about 10 wt%, at least about 2 wt% and less than about 8 wt%, or at least about 4 wt% and less than about 6 wt%.

It is to be noted that, in one embodiment, the present invention is advantageous in that the temperature throughout the process may be kept relatively low, as noted elsewhere herein. Without being held to any particular theory, it is believed that processing at a low temperature is advantageous by, for example, acting to limit or prevent degradation of thermally unstable flavoring agents which may be prone to degradation at higher temperatures. Flavoring agents which are useful in a chewing gum produced by the present process include, for example, natural and artificial or synthetic flavorings, or a combination thereof, including essential oils, essences, extracts, powders, including acids and other substances capable of affecting the taste profile. Although the range of flavors usable in chewing gums is nearly limitless, they commonly fall into several broad categories. Fruit flavors include lemon, orange, lime, grapefruit, tangerine strawberry, apple, cherry, raspberry, blackberry, blueberry, banana, pineapple, cantaloupe, muskmelon, watermelon, grape, currant, mango, kiwi and many others as well as combinations thereof. Mint flavors include spearmint, peppermint, wintergreen, basil, corn mint, menthol and mixtures thereof. Spice flavors include cinnamon, vanilla, clove, chocolate, nutmeg and many others. Less commonly used are herbal and savory flavors, such as popcorn, chili, corn chip and the like.

The flavoring agent may also include a cooling agent to enhance the flavor and perceived breath freshening of the product. In addition to menthol, cooling agents may include, for example, ethyl *p-*menthane carboxamide, N-2,3-trimethyl-2-isoprylbutanamide, menthyl glutarate, menthyl succinate, menthol PC carbonate, menthol EC carbonate, menthyl lactate, menthone glyceryl ketal, menthol glyceryl ether, N-tertbutyl-p-menthane-3-carboxamide, *p*-menthane-3-carboxylic acid glycerol ester, methyl-2-isopryl-bicycle (2.2.1), heptane-2-carboxamide, menthol methyl ether and combinations thereof. The chewing gum of the present invention may also optionally include other breath freshening or anti-microbial ingredients, including anti-microbial essential oils and flavor components, such as peppermint, methyl salicylate, thymol, eucalyptol, cinnamic aldehyde, polyphosphate, pyrophosphate and combinations thereof, may also be used.

It is to be noted that the flavoring agent may be added as a liquid, a solid or both. For example, in some instances, a chewing gum composition of the present invention may contain a spray dried flavor as a partial or complete replacement of a liquid flavor. Alternatively, the flavorant may be in the form of a freeze-dried solid (e.g., a powder). When a combination of liquid and solid flavoring agents are used, the weight ratio of the liquid flavorant to the solid flavorant may range, for example, from between about 5:1 to about 1:5, or about 2:1 to about 1:2. In one embodiment, the liquid flavorant is slightly in excess, this ratio for example being between about 1:1 and about 1.5:1 (e.g., about 1.2:1 or about 1.3:1).

Similar to the flavoring agent, the type(s), as well as amount(s), of the coloring agent(s) added to the granular chewing gum composition may vary due to a number of considerations, including for example the desired intensity and/or duration of the color the composition is to possess, the precise concentration used being determined using means standard in the art. Additionally, the amount of coloring agent added to the granular chewing gum composition may also vary with the type of coloring agent to be added, as some agents are more intense than others. Exemplary coloring agents include, for example, commonly used colors or whiteners (e.g., FD&C dyes and lakes, fruit and vegetable extracts, titanium dioxide, etc.).

A processing aid, such as a lubricating agent, may also optionally be included in the granular chewing gum composition, the processing aid, such as a lubricant, being one or more substances that help to keep the granular chewing gum composition in free-flowing particulate form, both during the formation of the chewing gum formulation and afterwards. Furthermore, the presence of the processing aid may also result in a granular chewing gum composition that is less sticky, which reduces the amount of the composition that sticks to the interior surfaces and blades of the mixing equipment, and therefore remains inside the mixing equipment after each production run. By reducing the amount of the chewing gum composition that remains inside the mixing equipment after each production run, the yield of chewing gum composition from each production run may be increased (e.g., yields of, for example, at least about 80%, 90%, 95%, or more, of the chewing gum composition being obtained). Further, the mixing equipment, or other processing equipment, may be cleaned more easily and thoroughly, thereby resulting in less down time between production runs.

Like the flavoring agents and the coloring agents, the type(s), as well as amount(s), of the processing aid (e.g., lubricating agent), added to the granular chewing gum composition may vary due to a number of considerations, including for example whether or not the granular chewing gum composition is to be compressed into a tablet, the processing aid, for example, aiding in the tabletting of the granular composition. Additionally, the amount of processing aid added to the granular chewing gum composition, for example prior to tabletting, may also vary with the type of aid to be added, as some are more effective than others. In one embodiment, the concentration of the processing aid, such as a lubricant, is at least about 0.5 wt% of the granular composition, at least about 1 wt%, at least about 2 wt%, at least about at least about 3 wt%, at least about 4 wt%, at least about 5 wt% or more (e.g., at least about 6 wt%, about 8wt% or more), the concentration for example falling within the range of at least about 0.5 wt% and less than about 5 wt%, or at least about 1 wt% and less than about 4 wt%. Exemplary agents processing aids include lubricants such as, for example, stearates (e.g., magnesium stearate), sodium stearyl fumarate, hydrogenated vegetable oils, talc, silica (e.g., fumed silica or precipitated silica), or stearic acid, with stearates being used in one particular embodiment.

Additionally, the granular chewing gum composition of the present invention may optionally contain a granulating agent, which in general is a substance that does not adversely react with the other components of the granular chewing gum composition and result in a chewing gum composition with the desired properties when mixed with the other components, according to the process of the present invention. The granulating agent may be, in at least some embodiments, water-soluble, so that the final granular chewing gum composition will have better organoleptic properties. In one particular embodiment, the granulating agent also functions as a sweetening agent.

As previously noted, the granular chewing gum composition may contain, in addition to the HSH, one or more sweetening agents, or bulk sweeteners. The sweetening agent can essentially be anything known in the art, provided it does not adversely react with the other components of the chewing gum composition and, when used in the method of the present invention, helps to form a granular chewing gum composition with the desired properties. Examples of potential sweeteners for use in the granular chewing gum composition of the present invention include carbohydrates, particularly sugars (e.g., such as sucrose, dextrose, maltose, dextrin, glucose, fructose, levulose, galactose, dried invert sugars, corn syrup solids, and the like, alone or in combination), and/or sugarless sweeteners, such as tagatose, trehalose, sugar alcohols or polyols (e.g., sorbitol, mannitol, maltitol, xylitol, isomalt and erythritol, and/or a combination thereof), and/or high intensity artificial sweeteners (which are sometimes referred to as high potency or artificial sweeteners, and which may be defined as food acceptable chemicals which are at least about 10 or about 20 times sweeter than sucrose), such as glycine, aspartame, sucralose, NAPM derivates such as neotame, salts of acesulfame (e.g., acesulfame K), alitame, saccharin and its salts, cyclamic acid and its salts, cyclohexyl sulfamate, stevioside and glycyrrhizinate (e.g., ammonium glycyrrhizinate), dihydrochalcones, thaumatin, monellin, perilla-derived sweeteners, stevia-derived sweeteners, monatin, monellin, chalcones, as well as sweetener-sweetener salt combinations (e.g., aspartame-acesulfame salt), and the like, as well as mixtures thereof.

The sweetening agent, or bulk sweetener, in one embodiment is added as a dry particulate or powder. Exemplary sweeteners include sugars (such as sucrose, dextrose or a mixture thereof), and/or polyols (such as sorbitol, mannitol, isomalt, xylitol, erythritol, or a mixture thereof).

It is to be noted that certain substances can function as both a sweetening agent and a granulating agent, such as for example sugars (like sucrose, fructose, dextrose and mixtures thereof) and polyols (like sorbitol, mannitol, isomalt, xylitol, erythritol, and mixture thereof). When one or more of these substances is used in the chewing gum composition as a granulating agent, there may be no need for a separate or different sweetening agent.

As with the other components (e.g., flavoring agent, color agent, etc.) added to the granular chewing gum composition, the type(s), as well as amount(s), of the sweetening agent(s) added to the granular chewing gum composition may vary due to a number of considerations, including for example the desired intensity and/or duration of the sweetness the composition is to possess. Additionally, the amount of sweetening agent added to the granular chewing gum composition may also vary with the type of sweetening agent to be added, as some agents are more intense than others. In one embodiment, however, the concentration of sweetening agent is at least about 25 wt% of the granular composition, at least about 35 wt%, at least about 45 wt%, at least about 55 wt%, at least about 65 wt%, at least about 75 wt% or more, the concentration for example falling within the range of at least about 25 wt% and less than about 75 wt%, at least about 35 wt% and less than about 65 w%, or at least about 45 wt% and less than about 55 wt%.

Additionally, it is to be noted that, when an intense sweetener is used in the granular chewing gum composition, the concentration thereof may, for example, typically fall within the range of from about 0.01 wt% to about 2 wt%, or from about 0.1 wt% to about 1.5 wt%, or from about 0.5 wt% to about 1 wt%.

A softener may also optionally be added to the chewing gum, in order to optimize chewability and/or "mouthfeel" of the gum. A softener, which may also be known as a plasticizer or plasticizing agent, may, for example, constitute between about 0.5 to about 15 weight percent of the chewing gum, or from about 1 to about 10 wt% of the chewing gum, or from about 2 to about 8 wt% of the chewing gum. The softeners may include, for example, glycerin, lecithin, triacetin (or glycerol triacetate), and combinations thereof.

As previously noted, emulsifiers may also be used to modify the texture and cause the hydrophobic and hydrophilic components of the chewing gum composition to be miscible. Emulsifiers suitable for use in the present invention may include, for example, glycerol monostearate, glycerol triacetate, lecithin, mono- or di- glycerides, acetylated mono- or di- glycerides, and distilled mono- or di- glycerides.

### 4. Encapsulated Ingredients

It is to be noted that one or more of the components or ingredients added to the gum base, and/or the granulated chewing gum composition, may be encapsulated (e.g., a flavor, sweetener or other active ingredient); that is, an encapsulated component or ingredient of the chewing gum base, and/or the granulated chewing gum composition, may be added (e.g., added to the final blend or mixture, prior to compression). Typically, encapsulation is used in order to provide a longer lasting effect of the encapsulated component; for example, an encapsulated sweetener acts to provide longer lasting sweetness and flavor perception.

Different methods of encapsulating techniques, known in the art, may be used in accordance with the present invention including for example spray drying, spray cooling or chilling, wet granulation, wax granulation, fluid bed coating, film coating, fiber extrusion, and/or coascervation. Materials that may be used in these or other known encapsulation methods include, for example, gelatin, wheat protein, soya protein, sodium caseinate, caseine, gum arabic, modified starch, hydrolyzed starches (maltodextrines), alginates, pectin, carregeenan, xanthan gum, locus bean gum, chitosan, bees wax, candelilla wax, carnauba wax, hydrogenated vegetable oils, zein and/or sucrose.

### 5. Compressing/Coating

### a. Compressing

In general, essentially any standard technique for compressing a granular composition into a particular shape may be employed with the granulated chewing gum composition of the present invention, in order to form a compressed shape (e.g., a tablet) thereof. For example, one common technique for compressing a granular composition is tabletting. Generally speaking, tabletting involves the use of a the tablet press, which comprises a die and a punch. The basic principles of compression apply, wherein the die is filled with the granular chewing gum composition and then it is compressed by the punch being lowered under pressure. This pressure on the composition is maintained for a period of time, known as the dwell time, which is sufficient to bond the granular particles of the composition together and compact them to form the compressed chewing gum shape (e.g., tablet). Once formed, the tablet is ejected from the die.

An alternative, and also common, technique for compressing the granular composition is briquetting. This technique is described in, for example, PCT Application No. WO99/25203, the entire content of which is incorporated herein by reference.

It is to be noted that many shapes and sizes of a tablet may be made by varying the shape of the die and punch (e.g. circular, briquette, pillow, etc.).

### b. Coating

Optionally, once compressed (e.g., tabletted), the compressed chewing gum composition of the present invention may be coated; that is, an outer coating may optionally be applied to the granular chewing gum composition after it has been compressed into, for example, a tablet. The outer coating applied may have one of many different compositions generally known in the art, depending upon for example the effect to be achieved by the application thereof. For example, a coating may be applied to extend storage stability of the compressed chewing gum composition, relative to a chewing gum of the same composition that is not coated. A suitable coating type in such an instance may include, for example, one of a number of known coatings (e.g., a hard coating, a film coating, etc.) commonly used for the coating of chewing gum, pharmaceutical products and/or confectioneries.

Essentially any standard technique which gives partial or full coating of the compressed chewing gum tablet can be used, including for example conventional coating/panning of the compressed chewing gum tablet, in order to apply for example a conventional "hard" coating. In such a technique, the compressed tablet is sugar coated or panned by conventional panning techniques to make a unique sugar coated gum tablet. Conventional panning procedures typically coat with sucrose, but recent advances in panning have allowed the use of other carbohydrate materials to be used in the place of sucrose. Some of these components include, but are not limited to, dextrose, maltose, palatinose or isomalt, xylitol, erythritol, lactitol, hydrogenated isomaltulose and other, new alditols or a combination thereof. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum, gum tragacanth, insoluble carbonates, like calcium carbonate or magnesium carbonate, and talc. Anti-tack agents may also be added as panning modifiers, which allow the use of a variety of carbohydrates and sugar alcohols to be used in the development of new panned or coated gum products. A flavoring agent, such as those detailed elsewhere herein, may also optionally be present in the coating material.

Another type of pan coating that could alternatively be used is referred to as film coating, which is typically more common in pharmaceuticals than in confectionaries, but the procedures are similar. In general, a film-like material, such as a shellac, zein, or a cellulose-type material, is applied onto a tablet-type product, forming a thin film on the surface of the product. The film is applied by mixing, for example, a polymer, a plasticizer and a solvent, and optionally a pigment, and spraying the mixture onto the tablet surface. This may be done in a conventional type of panning equipment, or alternatively in a more advanced, side-vented coating pan may be used. A side-vented pan may be desirable because, depending upon the film type being applied, a flammable solvent (e.g., an alcohol) may be used in the process, rather than a non-flammable solvent such as water. When a solvent like alcohol is used, extra precautions are needed to prevent fires and explosions, and specialized equipment is used. However, due to recent advances in polymer research and in film coating technology, the problem associated with the use of solvents in at least some coatings has been eliminated. These advances make it possible to apply aqueous films to a candy, lozenge, pressed tablet or chewing gum product.

It is to be noted that suitable film-coating polymers may include, in addition to those noted above, edible cellulose derivatives, such as cellulose ethers including methylcellulose (MC), hydroxyethyl cellulose (HEC), hydroxypropyl cellulose (HPC) and hydroxypropyl methylcellulose (BPMC). Other useful film-coating agents are acrylic polymers and copolymers (e.g., methylacrylate aminoester copolymer or mixtures of cellulose derivatives and acrylic polymers). A particular group of film-coating polymers, also referred to as functional polymers, are polymers that, in addition to their film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers include, for example: cellulose acetate phtalate (CAP), polyvinyl acetate phtalate (PVAP), shellac, methacrylic acid copolymers, cellulose acetate trimellitate (CAT) and HPMC. It will be appreciated that the outer film coating according to the present invention may comprise any combination of the above film-coating polymers.

In other embodiments, the film coating layer of the compressed chewing gum composition of the present invention comprises a plasticizing agent having the capacity to alter the physical properties of a polymer, to render it more useful in performing its function as a film-forming material. In general, the effect of plasticizers is to make the polymer softer and more pliable, as the plasticizer molecules interpose themselves between the individual polymer strands, thus breaking down polymer-polymer interactions. Most plasticizers used in film coating are either amorphous or have very little crystallinity. In the present context, suitable plasticizers include, for example, polyols such as glycerol, propylene glycol, polyethylene glycol, organic esters such as phtalate esters, dibutyl sebacate, citrate esters and thiacetin, oils/glycerides including castor oil, acetylated monoglycerides and fractionated coconut oil.

The film coating of the chewing gum elements may also contain one or more colorants or opacifiers. In addition to providing a desired color hue, such agents may contribute to protecting the compressed gum base against pre-chewing reactions, in particular by forming a barrier against moisture and gasses. Suitable colorants include organic dyes and their lakes, inorganic coloring agents, e.g. titanium oxide and natural colors such as, for example, beta-carotene.

In a typical hard coating process, a syrup containing a crystallizable sugar and/or a polyol is applied onto the gum center and the water it contains is evaporated off by blowing with warm, dry air. This cycle may be repeated several times (for example, about 10 to about 80 times, or about 25 to about 50 times), in order to reach the desired swelling. The term "swelling" refers to the increase in weight of the product, as considered at the end of the coating operation by comparison with the beginning, and in relation to the final weight of the coated products. In accordance with the present invention, the coating layer may constitute, for example, about 1 to about 50 wt% of the coated chewing gum tablet, or about 2 to about 25 wt%, or about 5 to about 20 wt%, relative to the total weight of the coated chewing gum tablet.

Alternatively or additionally, a film coating may be applied to the gum center, either before or after or instead of the above-noted hard coating. In general, the film coating typically comprises one or more film-forming polymeric agents, and optionally one or more auxiliary compounds (e.g. plasticizers, pigments and/or opacifiers). As noted above, a film coating is a thin polymer-based coating applied to a chewing gum centre of any of the above forms. The thickness of such a coating may be, for example, between about 10 and 100 microns, or about 25 and about 75 microns. Generally, the film coating is applied by passing the chewing gum centers, or alternatively a gum tablet already having on the surface thereof another coating of some kind (e.g., hard coating), through a spray zone with atomized droplets of the coating materials in a suitable aqueous or organic solvent vehicle, after which the material adhering to the gum center, or coated tablet, is dried before the next portion of coating is applied. This cycle is repeated until the desired coating or film is achieved.

### B. Process For Preparing The Chewing Gum Composition

With reference to Fig. 1, an exemplary flowchart is provided which illustrates many of the various steps and/or pieces of equipment that may optionally be employed in an applicable embodiment of the present invention. In Step 1 thereof, a suitable gum base, as detailed elsewhere herein, is optionally comminuted (e.g., ground or granulated), in order to obtain a gum base having a desired particle size for use in preparing the granulated chewing gum composition of the present invention. The gum base may be comminuted using essentially any means known in the art for size reduction, including for example grinding or granulation of the gum base. Some gum bases may require substantial cooling prior grinding or granulation, in order for example to make the gum base harder (see, e.g., U.S. Patent No. 6,322,828 and No. 6,582,738, as well as U.S. Publication No. 2004/0058033, all of which are incorporated herein by reference). However, as detailed elsewhere herein, in one embodiment the gum base is sufficiently hard, such that it may be comminuted (e.g., ground or granulated) at an elevated temperature; that is, the gum base is sufficiently hard, such that it may be comminuted at a temperature of greater than 5°C (40°F), greater than 10°C ( 50°F), or greater than 15°C ( 60°F), the gum base being comminuted, for example, at a temperature in the range of greater than 5°C ( 40°F) and less than 25°C ( 80°F), or greater than 10°C ( 50°F) and less than 15°C ( 60°F)

Optionally, an aid or lubricant (e.g., talc or calcium carbonate) may be added to the apparatus (e.g., a mill or grinder) that is used to comminute the gum base, before or during addition of the gum base thereto, in order to, for example, prevent sticking of the gum base to the surfaces therein and to make the gum base obtained therefrom more easily handled (i.e., less sticky or tacky), once grinding has been completed. Alternatively, an aid or lubricant, such as talc or calcium carbonate, is applied to the surface of the gum base to be comminuted prior to addition of the gum base to, for example, the mill or grinder. In yet another alternative, a sweetener may be used as an aid (e.g., a non-sugar sweetener such as sorbitol, mannitol, xylitol, maltitol, isomalt, erythritol, lactitol and the like, alone or in combination).

In this regard it is to be noted that, in one embodiment, the gum base to be ground is spherical or pellet-like, having for example an average diameter of 0.1 to 0.5 inches, or 0.2 to 0.4 inches. Additionally, the surface of the gum base may have a lubricant, such as talc or calcium carbonate, thereon, the concentration thereof being for example less than about 8 weight percent, about 6 weight percent, about 4 weight percent, or even about 2 weight percent, the concentration for example being between about 2 and about 8 weight percent, or about 2 to about 4 weight percent.

Essentially any apparatus or equipment known in the art for comminuting gum base may be used. For example, in one embodiment of the present invention a Fitz Mill (e.g., model DAS06), commercially available from the Fitzpatrick Company, may be used. Residence time within the mill or grinder may be dictated, for example, by the screen size through which the comminuted gum base passes before being collected. For example, in one embodiment the grinder is fitted with a U.S. Standard #5 sieve screen, which has a opening of a diameter of about 0.157 inches (i.e., about 4 mm).

Referring again to Fig. 1, in Step 2 thereof the comminuted (e.g., ground) gum base is next mixed or blended with other suitable chewing gum components, which may include, as noted elsewhere herein, HSH solids, a sweetener (e.g., one or more of sorbitol, xylitol, erythritol, maltitol, isomalt, etc.), flavoring agents, softeners, emulsifiers, coloring agents, fillers (e.g., silicates), or some other component (e.g., antioxidants, binding agents, acidulants, etc.) that confers a desired property to the granulated chewing gum composition. In at least one embodiment, however, at least a portion of a sweetener, such as sorbitol, is first added to the mixer. Without being held to any particular theory, it is generally believed that the addition of the sweeter, such a sorbitol, prior to addition of the ground gum base is beneficial, because the sweetener acts to coat the surfaces of the mixer and thus act to limit or prevent sticking of the gum base thereto.

It is to be noted that, after at least a portion of the sweetener, or one of the sweeteners, has been added, the order of addition, as well as the manner of addition, of the other components may vary. For example, each of the other granular chewing gum components (e.g., gum base, flavorant, colorant, etc.) may be added alone or in combination with one or more other components. Additionally, the entire amount of each component may be added during a single addition step. Alternatively, however, a portion of one or more of the components may be added at various points during the mixing step. For example, in one embodiment, a portion of the sweetener, or some other grinding aid, is added initially, in order to coat the surfaces in the grinder, and then another portion is added after the gum base has been added, such as after the gum base has been mixed for a time with the other components of the chewing gum composition. Without being held to a particular theory, it is believed the late addition of a portion of the sweetener, or other aid, near the end of the mixing step, acts to coat the particles of the now formed granular chewing gum composition in the mixer, enabling the composition to be more easily handled in subsequent processing steps, the coating for example making the composition less sticky or tacky.

Essentially any apparatus or equipment known in the art for mixing or blending of the gum base with the other components (e.g., flavors, sweeteners, etc.) may be used in accordance with the present invention. For example, a plough mixer, such as those commercially available from Littleford Industries (e.g., model 5M1200), may be used. During mixing, depending upon the nature or physical properties of the various components present in the mixer, as well the desired properties of the chewing gum to be obtained, little or no heat may be added applied thereto. In one embodiment, however, the mixer is jacketed (e.g., having a steam jacket), so that heat may be applied during mixing. For example, after optionally mixing the contents of the mixer for an initial period of time, the contents of the mixer may be heated by means of, for example, passing hot water (or steam) through the mixer jacket, to a temperate sufficient to ensure thorough and uniform incorporation of the various components into the gum base.

Without being held to any particular theory, it is generally believed that, in one embodiment, the temperature within the mixer is sufficiently high, such that the surface of the gum base particles begins to soften and/or melt. This is believed to aid with the incorporation of the various components of the chewing gum composition into the gum base. In particular, it is desirable to heat the base to ensure a substantial portion of the solid HSH agglomerates with, or enrobes, the gum base particles. Notably, however, the temperature is controlled so as to ensure the gum base does not melt to a significant degree, such that a molten gum mass is formed within the mixer, as in methods for preparing non-granular chewing gum compositions. Temperature control is desired here because it is also desired that the material discharged from the mixer still be in a substantially granular or particulate form, although a port of these granules may be agglomerated or stuck together.

In view of the foregoing, typically the mixer jacket is heated to a temperature sufficient to ensure the contents of the mixer reach a temperature of at least about 100°F (about 40°C) and less than about 150°F (about 65°C), or at least about 110°F (about 45°C) and less than about 130°F (about 55°C). In one particular embodiment, the temperature of the contents in the mixer is about 120°F (about 50°C). Additionally, although mixing may occur under increased pressure (which may affect process temperatures), typically atmospheric pressure is used.

Generally speaking, mixing is typically performed for a time and at a mixing rate sufficient to yield the desired product (e.g., a uniform or homogeneous blend of the flavor, sweetener, color and/or some other component in the gum base). The duration of mixing may be monitored by a number of means known in the art, including for example the load on the mixer, as indicated by the amperage thereof. For example, in one embodiment the amperage of the mixer is monitored, using means known in the art, and mixing is stopped when the amperage falls within a range of about 30 to about 80 amps, or about 40 to about 50 amps.

In this regard it is to be noted that process temperatures, pressures, duration in time (e.g., mixer amperage), mixing methods, etc. may be affected by the composition and/or load size of the chewing gum composition. Accordingly, it is to be further noted that one or more of these parameters and/or methods may be other than herein described without departing from the scope of the present invention.

It is to be still further noted that, although it may be desirable to control mixing conditions to ensure the contents of the mixer remain in a substantially particulate form (e.g., a granular and/or free-flowing form), as the gum base and other components of the chewing gum are mixed, they may, for a time, form a doughy or plastic mass that is not in a substantially particulate form. In this situation, the mixer can be outfitted with one or more choppers that act to break up the doughy or plastic mass, and form particles that are then removed from the mixer. The above-note plough mixer from Littleford may be fitted with, for example, up to 4 of such choppers. Alternatively, however, the contents of the mixture can be removed in the form of a doughy or plastic mass and subjected to a subsequent comminution step to form a free-flowing particulate.

After mixing has been completed, the contents of the mixer are removed therefrom and allowed to cool to a temperature sufficiently low, such that the agglomerated gum particles or granules may be further milled to separate or break the particles or granules apart for further processing. Typically, therefore, the gum mass discharged from the mixer is allowed to cool to room temperature or below; that is, the gum mass is allowed to cool to a temperature of less than about 80°F (about 25°C), less than about 70°F (about 20°C), or less than about 60°F (about 15°C), the gum mass being cooled, for example, to a temperature between about 60°F and about 70°F. Essentially any technique known in the art may be employed to cool the chewing gum composition. However, one or more known techniques are typically used to remove heat from the composition, in order to increase the rate at which the composition cools to the desired temperature. For example, in one embodiment the chewing gum composition is placed in pans or trays and stored in a chiller or cooling room, in order to more rapidly cool the composition to, for example, room temperature.

Referring again to Fig. 1, and Step 3 therein, after the gum mass has been allowed to cool sufficiently, it is subjected to a force sufficient to break apart the chewing gum composition granules. Essentially any technique known in the art may be used here. For example, in one embodiment of the present invention, a Fitz mill, such as the one referenced elsewhere herein, may be employed. In as much as the purpose of this step is typically not size reduction of the mixed chewing gum composition, a screen having a sieve size larger than the one used for grinding of the gum base is typically used. For example, in one embodiment the mill is fitted with a U.S. Standard #4 sieve screen, which has an opening of a diameter of 0.187 inches (i.e., 4.75 mm).

It is to be noted that, after Step 2 or 3, the resulting material comprises gum base coated with the various components of the chewing gum composition. Additionally, it may also comprise a portion of one or more of the various components in a free state; that is, it may also comprise a portion of one or more of the components which has not agglomerated with the gum base or other components that were added to the mixer in Step 3.

In Step 4, the granular chewing gum composition may be subjected to an additional mixing step, in order to add other components, or more of a previously added component, (e.g., a flavorant, a lubricant, an acidulant, a colorant, etc., and/or a temperature sensitive material, such as an intense sweetener, a nutraceutical, a pharmaceutical, etc.), prior to compression of the granular composition into, for example, a tablet. In Step 5, the resulting mixture may then be sifted (or treated in some other way, such as by passing through or over magnets), in order to remove any large or undesirable materials therefrom that may, for example, interfere with compression or hinder the formation of an acceptable tablet. In Step 6, the resulting granular chewing gum composition is compressed or tabletted, using means known in the art. Finally, once the compressed (e.g., tabletted), the chewing gum composition may, in Step 7, optionally be coated, again using known techniques in the art.

In this regard it is to be noted that, depending upon, for example, the nature of the gum base used in the granular chewing gum composition, the composition may smear or become sticky/tacky, upon, for example, exposure to elevated temperature and/or friction. According, once the material is collected from the mixer in Step 2, precautions may be taken to control temperature and friction in the subsequent processing steps. For example, the mixing in Step 4 may be performed using as gentle and as low friction means as possible, in order to limit or avoid unnecessary heating the composition. Additionally, the tolerances of the tabletting apparatus used in Step 6 may be controlled limit or avoid unnecessary friction or pressure being applied to the granulated composition, as it is transferred to the die for compression.

The present invention is further illustrated by the following Example. This Example is not to be viewed as limiting the scope of the invention or the manner in which it may be practiced.

### EXAMPLE

A jacketed 1200 liter plough mixer was heated to a temperature (jacket temperature) between 140°C 180°C. All components to be added thereto had a temperature, prior to addition, of between 18°C and 30°C.

Without any mixing or agitation, 249 kg of powdered sorbitol (Sorbogem fines, commercially available from SPI Polyols, Inc.) was added to the plough mixing. The sorbitol was mixed briefly, to distribute the powder within the mixer and coating the inner surfaces thereof with the powder. A ground gum base ( 143 kg) was added, followed by 45 kg of hydrogenated starch hydrolysate solids (Stabilite SD60, commercially available from Grain Process Corp.), and 1.35 kg of high intensity sweeteners (a mixture of aspartame, acesulfame-K and sucralose). Once the additions were complete, mixing was initiated for a duration of 2 to 6 minutes, after which 12 kg of a liquid peppermint flavorant was added. Mixing was continued until a target or desired power load on the mixer was reached (as measured using an amp meter attached to the mixer motor, the target in this instance being between 35 and 50 amps, on an 89 am (full load) motor). The total mixing time was between 10 and 15 minutes.

Once mixing was complete, the granulated mixture was removed from the mixer. The temperature of the mixture was between 50°C and 60°C. The granulated mixture was spread on trays and allowed to cool to room temperature (between 5°C and 25°C), which took 6 to 8 hours.

After cooling, the granules of the cooled mixture were agglomerated or stuck together. These granules were separated using a fixed bar hammer mill (e.g., a Fitzmill model D-6, equipped with a 0.187 inch round hole screen), and collected. Approximately 225 kg of the collected granules were then placed in a V-blender, without any agitation or mixing. Also added to the V-blender were 4.8 kg of talc, 3.8 kg of silicon dioxide (Sipernat 50S, commercially available from Degussa), 3.8 kg of magnesium stearate, as well as a spray dried peppermint flavorant and additional high intensity sweeteners. These components were then mixed or blended for about 5 minutes.

The resulting granulated chewing gum blend was collected and then fed into a conventional tablet press (e.g., a Mansety Xpress 700 tablet press equipped with a vacuum feeding system, and a sifter with a 0.156 inch opening). The resulting tablets were finally coated using a conventional pan-coating technique and a xylitol-containing coating syrup.

It is to be noted that the present invention is not limited to the above embodiments and can be variously modified. The above description of the various embodiments, including the Example, is intended only to acquaint others skilled in the art with the invention, its principles, and its practical application so that others skilled in the art may adapt and apply the invention in its numerous forms, as may be best suited to the requirements of a particular use.

With reference to the use of the word(s) comprise or comprises or comprising in this entire specification (including the claims below), unless the context requires otherwise, those words are used on the basis and clear understanding that they are to be interpreted inclusively, rather than exclusively, and applicants intend each of those words to be so interpreted in construing this entire specification.

## Claims

1. A granular chewing gum composition comprising a gum base, a flavorant and a solid hydrogenated starch hydrolysate, wherein said solid hydrogenated starch hydrolysate comprises greater than 90 wt% of saccharides having a degree of polymerization greater than or equal to 3, based on the total weight of the hydrogenated starch hydrolysate.

2. A granular chewing gum composition of claim 1 wherein said granular chewing gum composition comprises at least 2 wt% of the solid hydrogenated starch hydrolysate, and said chewing gum composition optionally further comprises a bulk sweetener.

3. A granular chewing gum composition of any one of the preceding claims wherein said solid hydrogenated starch hydrolysate comprises greater than 95 wt% of saccharides having a degree of polymerization greater than or equal to 3, based on the total weight of the hydrogenated starch hydrolysate.

4. A granular chewing gum composition of any one of the preceding claims wherein said solid hydrogenated starch hydrolysate comprises greater than 75 wt% of saccharides having a degree of polymerization greater than or equal to 5, based on the total weight of the hydrogenated starch hydrolysate.

5. A granular chewing gum composition of any one of the preceding claims wherein said solid hydrogenated starch hydrolysate comprises greater than 40 wt% of saccharides having a degree of polymerization greater than or equal to 10, based on the total weight of the hydrogenated starch hydrolysate.

6. A granular chewing gum composition of any one of the preceding claims wherein said solid hydrogenated starch hydrolysate has an average particle size of greater than 20 microns and less than 100 microns.

7. A granular chewing gum composition of any one of the preceding claims wherein said granular chewing gum composition comprises less than 50 wt%, of the solid hydrogenated starch hydrolysate, based on the total weight of the granular chewing gum composition.

8. A granular chewing gum composition of any one of the preceding claims wherein said granular chewing gum composition comprises from greater than 5 wt% to 15 wt% of the solid hydrogenated starch hydrolysate, based on the total weight of the granular chewing gum composition.

9. A granular chewing gum composition of any one of the preceding claims wherein said solid hydrogenated starch hydrolysate has a moisture content of less than 8 wt%, based on the total weight of the hydrogenated starch hydrolysate.

10. A granular chewing gum composition of any one of the preceding claims wherein the granular chewing gum is formed into a tablet.

11. A granular chewing gum composition of claim 9 further comprising a coating on the surface of the tablet.

12. A process for preparing a granular chewing gum composition, the process comprising contacting a granulated gum base, a flavorant, a bulk sweetener and a solid hydrogenated starch hydrolysate comprising greater than 90 wt% of saccharides having a degree of polymerization greater than or equal to 3, based on the total weight of the hydrogenated starch hydrolysate, wherein said granular chewing gum composition comprises at least 5 wt% of the solid hydrogenated starch hydrolysate, based on the total weight of the granular chewing gum composition.

13. A process of claim 12 wherein greater than 90 wt% of the granulated gum base has a particle size which is greater than 0.15 mm and less than 0.8 mm.

14. A process of any one of 12 or 13 wherein said solid hydrogenated starch hydrolysate has an average particle size of greater than 20 microns and less than 100 microns.

15. The process of any one of claims 12 to 14 wherein the process further comprises any of the following steps
(i) compressing the granular chewing gum composition into a tablet, and/or
(ii) applying a coating on the surface of said tabletted chewing gum composition, and/or
(iii) comminuting a chewing gum base at a temperature of greater than 5°C, and then contacting said comminuted base with said flavorant, said bulk sweetener, and said solid hydrogenated starch hyrolysate.

## Patentansprüche

1. Körnige Kaugummi-Zusammensetzung, umfassend eine Kaumasse, einen Aromastoff und ein festes hydriertes Stärkehydrolysat, wobei das feste hydrierte Stärkehydrolysat zu mehr als 90 Gewichtsprozent aus Sacchariden mit einem Polymerisationsgrad von größer oder gleich 3 besteht, basierend auf dem Gesamtgewicht des hydrierten Stärkehydrolysats.

2. Körnige Kaugummi-Zusammensetzung gemäß Anspruch 1, wobei die körnige Kaugummi-Zusammensetzung zu mindestens 2 Gewichtsprozent aus dem festen hydrierten Stärkehydrolysat besteht und die Kaugummi-Zusammensetzung optional ferner einen Zuckeraustauschstoff umfasst.

3. Körnige Kaugummi-Zusammensetzung gemäß einem der vorherigen Ansprüche, wobei das feste hydrierte Stärkehydrolysat zu mehr als 95 Gewichtsprozent aus Sacchariden mit einem Polymerisationsgrad von größer oder gleich 3 besteht, basierend auf dem Gesamtgewicht des hydrierten Stärkehydrolysats.

4. Körnige Kaugummi-Zusammensetzung gemäß einem der vorherigen Ansprüche, wobei das feste hydrierte Stärkehydrolysat zu mehr als 75 Gewichtsprozent aus Sacchariden mit einem Polymerisationsgrad von größer oder gleich 5 besteht, basierend auf dem Gesamtgewicht des hydrierten Stärkehydrolysats.

5. Körnige Kaugummi-Zusammensetzung gemäß einem der vorherigen Ansprüche, wobei das feste hydrierte Stärkehydrolysat zu mehr als 40 Gewichtsprozent aus Sacchariden mit einem Polymerisationsgrad von größer oder gleich 10 besteht, basierend auf dem Gesamtgewicht des hydrierten Stärkehydrolysats.

6. Körnige Kaugummi-Zusammensetzung gemäß einem der vorherigen Ansprüche, wobei das feste hydrierte Stärkehydrolysat eine mittlere Korngröße von über 20 Mikrometer und unter 100 Mikrometer hat.

7. Körnige Kaugummi-Zusammensetzung gemäß einem der vorherigen Ansprüche, wobei die körnige Kaugummi-Zusammensetzung zu weniger als 50 Gewichtsprozent aus dem festen hydrierten Stärkehydrolysat besteht, basierend auf dem Gesamtgewicht der körnigen Kaugummi-Zusammensetzung.

8. Körnige Kaugummi-Zusammensetzung gemäß einem der vorherigen Ansprüche, wobei die körnige Kaugummi-Zusammensetzung zwischen mehr als 5 Gewichtsprozent und bis zu 15 Gewichtsprozent aus dem festen hydrierten Stärkehydrolysat besteht, basierend auf dem Gesamtgewicht der körnigen Kaugummi-Zusammensetzung.

9. Körnige Kaugummi-Zusammensetzung gemäß einem der vorherigen Ansprüche, wobei das feste hydrierte Stärkehydrolysat einen Feuchtigkeitsgehalt von weniger als 8 Gewichtsprozent hat, basierend auf dem Gesamtgewicht des hydrierten Stärkehydrolysats.

10. Körnige Kaugummi-Zusammensetzung gemäß einem der vorherigen Ansprüche, wobei der körnige Kaugummi in eine Tablette geformt ist.

11. Körnige Kaugummi-Zusammensetzung gemäß Anspruch 9, ferner umfassend einen Überzug auf der Oberfläche der Tablette.

12. Verfahren zum Herstellen einer körnigen Kaugummi-Zusammensetzung, das Verfahren umfassend das In-Kontakt-Bringen einer körnigen Kaumasse, eines Aromastoffs, eines Zuckeraustauschstoffs und eines festen hydrierten Stärkehydrolysats, das zu mehr als 90 Gewichtsprozent aus Sacchariden mit einem Polymerisationsgrad von größer oder gleich 3 besteht, basierend auf dem Gesamtgewicht des hydrierten Stärkehydrolysats, wobei die körnige Kaugummi-Zusammensetzung zu mindestens 5 Gewichtsprozent aus dem festen hydrierten Stärkehydrolysat besteht, basierend auf dem Gesamtgewicht der körnigen Kaugummi-Zusammensetzung.

13. Verfahren gemäß Anspruch 12, wobei mehr als 90 Gewichtsprozent der körnigen Kaumasse eine Korngröße haben, die größer als 0,15 mm und kleiner als 0,8 mm ist.

14. Verfahren gemäß einem der Ansprüche 12 oder 13, wobei das feste hydrierte Stärkehydrolysat eine mittlere Korngröße von über 20 Mikrometer und unter 100 Mikrometer hat.

15. Verfahren gemäß einem der Ansprüche 12 bis 14, wobei das Verfahren ferner einen der folgenden Schritte umfasst:
(i) das Komprimieren der körnigen Kaugummi-Zusammensetzung zu einer Tablette, und/oder
(ii) das Aufbringen eines Überzugs auf die Oberfläche der tablettierten Kaugummi-Zusammensetzung, und/oder
(iii) das Zerkleinern einer Kaumasse bei einer Temperatur von über 5 °C und das anschließende In-Kontakt-Bringen der zerkleinerten Kaumasse mit dem Aromastoff, dem Zuckeraustauschstoff und dem festen hydrierten Stärkehydrolysat.

## Revendications

1. Une composition de chewing-gum granulaire comportant une base de gomme, un aromatisant et un hydrolysat d'amidon hydrogéné solide, où ledit hydrolysat d'amidon hydrogéné solide comporte plus de 90 % poids de saccharides ayant un degré de polymérisation supérieur ou égal à 3, sur la base du poids total de l'hydrolysat d'amidon hydrogéné.

2. Une composition de chewing-gum granulaire de la revendication 1 où ladite composition de chewing-gum granulaire comporte au moins 2 % poids de l'hydrolysat d'amidon hydrogéné solide, et ladite composition de chewing-gum comporte de plus de façon optionnelle un édulcorant de charge.

3. Une composition de chewing-gum granulaire de n'importe laquelle des revendications précédentes où ledit hydrolysat d'amidon hydrogéné solide comporte plus de 95 % poids de saccharides ayant un degré de polymérisation supérieur ou égal à 3, sur la base du poids total de l'hydrolysat d'amidon hydrogéné.

4. Une composition de chewing-gum granulaire de n'importe laquelle des revendications précédentes où ledit hydrolysat d'amidon hydrogéné solide comporte plus de 75 % poids de saccharides ayant un degré de polymérisation supérieur ou égal à 5, sur la base du poids total de l'hydrolysat d'amidon hydrogéné.

5. Une composition de chewing-gum granulaire de n'importe laquelle des revendications précédentes où ledit hydrolysat d'amidon hydrogéné solide comporte plus de 40 % poids de saccharides ayant un degré de polymérisation supérieur ou égal à 10, sur la base du poids total de l'hydrolysat d'amidon hydrogéné.

6. Une composition de chewing-gum granulaire de n'importe laquelle des revendications précédentes où ledit hydrolysat d'amidon hydrogéné solide a une taille de particules moyenne supérieure à 20 microns et inférieure à 100 microns.

7. Une composition de chewing-gum granulaire de n'importe laquelle des revendications précédentes où ladite composition de chewing-gum granulaire comporte moins de 50 % poids de l'hydrolysat d'amidon hydrogéné solide, sur la base du poids total de la composition de chewing-gum granulaire.

8. Une composition de chewing-gum granulaire de n'importe laquelle des revendications précédentes où ladite composition de chewing-gum granulaire comporte de plus de 5 % poids à 15 % poids de l'hydrolysat d'amidon hydrogéné solide, sur la base du poids total de la composition de chewing-gum granulaire.

9. Une composition de chewing-gum granulaire de n'importe laquelle des revendications précédentes où ledit hydrolysat d'amidon hydrogéné solide a une teneur en eau inférieure à 8 % poids, sur la base du poids total de l'hydrolysat d'amidon hydrogéné.

10. Une composition de chewing-gum granulaire de n'importe laquelle des revendications précédentes où le chewing-gum granulaire est formé en une dragée.

11. Une composition de chewing-gum granulaire de la revendication 9 comportant de plus un revêtement sur la surface de la dragée.

12. Un procédé pour préparer une composition de chewing-gum granulaire, le procédé comportant la mise en contact d'une base de gomme granulée, d'un aromatisant, d'un édulcorant de charge et d'un hydrolysat d'amidon hydrogéné solide comportant plus de 90 % poids de saccharides ayant un degré de polymérisation supérieur ou égal à 3, sur la base du poids total de l'hydrolysat d'amidon hydrogéné, où ladite composition de chewing-gum granulaire comporte au moins 5 % poids de l'hydrolysat d'amidon hydrogéné solide, sur la base du poids total de la composition de chewing-gum granulaire.

13. Un procédé de la revendication 12 où plus de 90 % poids de la base de gomme granulée a une taille de particules qui est supérieure à 0,15 mm et inférieure à 0,8 mm.

14. Un procédé de n'importe laquelle des revendications 12 ou 13 où ledit hydrolysat d'amidon hydrogéné solide a une taille de particules moyenne supérieure à 20 microns et inférieure à 100 microns.

15. Le procédé de n'importe laquelle des revendications 12 à 14 où le procédé comporte de plus n'importe lesquelles des étapes suivantes :
(i) comprimer la composition de chewing-gum granulaire en une dragée, et/ou
(ii) appliquer un revêtement sur la surface de ladite composition de chewing-gum en dragée, et/ou
(iii) fragmenter une base de chewing-gum à une température supérieure à 5 °C, et ensuite mettre en contact ladite base fragmentée avec ledit aromatisant, ledit édulcorant de charge, et ledit hydrolysat d'amidon hydrogéné solide.
